Europäisches Patentamt

European Patent Office

Office européen des brevets

(19)

(11) Numéro de publication : **0 096 615**
**B1**

(12)                    FASCICULE DE BREVET EUROPÉEN

(45) Date de publication du fascicule du brevet :
20.08.86

(51) Int. Cl.⁴ : **G 02 B   6/26**

(21) Numéro de dépôt : 83401035.7

(22) Date de dépôt : 25.05.83

(54) **Commutateur optique.**

(30) Priorité : 27.05.82 FR 8209217

(43) Date de publication de la demande :
21.12.83 Bulletin 83/51

(45) Mention de la délivrance du brevet :
20.08.86 Bulletin 86/34

(84) Etats contractants désignés :
DE GB IT

(56) Documents cités :
EP-A- 0 025 586
EP-A- 0 029 777
FR-A- 2 391 482
GB-A- 2 014 751
US-A- 4 102 579

(73) Titulaire : SOURIAU & Cie (S.A.)
9/13, rue du Général Galliéni
F-92103 Boulogne-Billancourt (FR)

(72) Inventeur : Debeaux, Alain Frédiric
4, Square Henri Sellier
F-92290 Chatenay-Malabry (FR)
Inventeur : Crosnier, Jean-Jacques
4, rue Ledru-Rollin
F-92260 Fontenay-Aux-Roses (FR)
Inventeur : Martin, Daniel
18, rue Ramey
F-75018 Paris (FR)

(74) Mandataire : Chevallier, Robert Marie Georges
Société SEDIC 40, rue Victor Basch
F-92120 Montrouge (FR)

Jouve, 18, rue St-Denis, 75001 Paris, France

# Description

La présente invention concerne les commutateurs optiques c'est-à-dire en fait les dispositifs qui permettent, par tout moyen, de délivrer une information sous forme lumineuse à au moins deux niveaux, c'est-à-dire à partir d'un signal lumineux appliqué à l'entrée, ayant une certaine valeur, obtenir à la sortie du dispositif, un signal lumineux correspondant pouvant avoir deux valeurs comme par exemple la présence totale du faisceau lumineux ou son absence qui se représente notamment dans le domaine numérique par un 1 et un 0.

Cependant, le commutateur optique selon l'invention peut aussi présenter toute la gamme des valeurs des faisceaux lumineux comprises entre ces deux états suivant éventuellement la configuration de structure que peut lui donner l'homme de l'art.

Bien entendu, il existe un certain nombre de dispositifs du type commutateur optique qui comprennent essentiellement un moyen pour émettre un faisceau lumineux sur un trajet donné, un récepteur de ce faisceau disposé sur ce trajet optique à une certaine distance de la source, et un moyen commandable permettant d'occulter le faisceau lumineux entre la source et le récepteur.

Bien entendu, un des principaux intérêts d'un tel commutateur optique est qu'il présente le minimum d'encombrement.

Pour cela, on a généralement utilisé comme partie de source lumineuse, des fibres optiques transportant un faisceau lumineux émis par une source disposée à un certain endroit, et comme récepteur, une deuxième fibre optique recevant le faisceau lumineux émis par la première couplée avec une cellule photosensible de traitement.

Généralement, pour minimiser l'encombrement d'un tel commutateur, il est apparu avantageux de disposer les deux fibres optiques émettrice et réceptrice sensiblement parallèles l'une à l'autre, et de les coupler de façon à ce que le faisceau émis par l'une puisse être reçu par l'autre au moyen par exemple de surface réfléchissante tels que par exemple deux prismes de renvoi ou deux miroirs plan.

Ce dispositif donne en théorie de bons résultats, mais présente néanmoins un inconvénient, du moins de type structurel, car il est relativement difficile de positionner l'une par rapport à l'autre les deux fibres optiques, et les deux moyens réfléchissants, qu'ils soient des prismes de renvoi ou des miroirs réfléchissants.

Par exemple, le document EP-A-029 777 décrit un atténuateur optique dans lequel des premiers moyens de transmission optique sont disposés sur une première voie optique, des seconds moyens de transmission optique sont disposés sur une seconde voie optique et il existe entre ces deux voies une troisième voie optique définie par deux miroirs inclinés placés face à face entre lesquels est placé un organe atténuateur. Une bonne transmission d'un faisceau optique entre la première et la seconde voie optiques à l'aide de la troisième voie optique nécessite des réglages individuels précis de chacun des deux miroirs inclinés.

L'invention a pour but d'éliminer cet inconvénient et de réaliser un commutateur optique donnant des résultats aussi bons que ceux de l'art antérieur mais d'une structure ne présentant pas de difficulté de réalisation et de montage. Plus précisément, l'invention a pour objet un commutateur optique comprenant :

des moyens source pour émettre un faisceau lumineux suivant un premier chemin optique,

des moyens récepteurs pour recevoir ledit faisceau lumineux suivant un deuxième chemin optique,

des moyens de couplage par réflexion des deux dits premier et second chemins optiques, comportant au moins deux portions de surface réfléchissante agencées à distance l'une de l'autre de façon à transmettre ledit faisceau dudit premier audit second chemin optique, en passant par un troisième chemin optique s'étendant entre les deux dites portions de surface réfléchissante, et,

des moyens, commandables, d'occultation au moins partielle dudit faisceau sur ledit troisième chemin optique,

caractérisé par le fait que les deux dites portions de surface réfléchissante appartiennent à une même surface unitaire ayant une symétrie de révolution autour d'un axe.

Selon une autre caractéristique de la présente invention, les premier et second chemins optiques, ainsi que ledit axe sont sensiblement parallèles.

Selon une autre caractéristique de la présente invention, ladite surface unitaire est une surface conique.

Selon une autre caractéristique de la présente invention, ladite surface est une surface courbe, concave de révolution.

Selon une autre caractéristique de la présente invention, lesdits moyens de couplage forment une image objet desdits moyens source sensiblement sur lesdits moyens récepteurs.

Selon une autre caractéristique de la présente invention, lesdits moyens de couplage forment au moins un objet image source sensiblement sur ledit troisième chemin optique.

D'autres caractéristiques et avantages de la présente invention apparaîtront au cours de la description suivante donnée en regard des dessins annexés à titre illustratif mais nullement limitatif, dans lesquels :

la figure 1 représente, vu en coupe sous forme schématique, un mode de réalisation d'un commutateur optique selon l'invention, et,

les figures 2 et 3 représentent deux schémas permettant de préciser la structure et le fonctionnement de deux modes de réalisation d'un commutateur optique selon l'invention en conformité avec le mode illustré sur la figure 1.

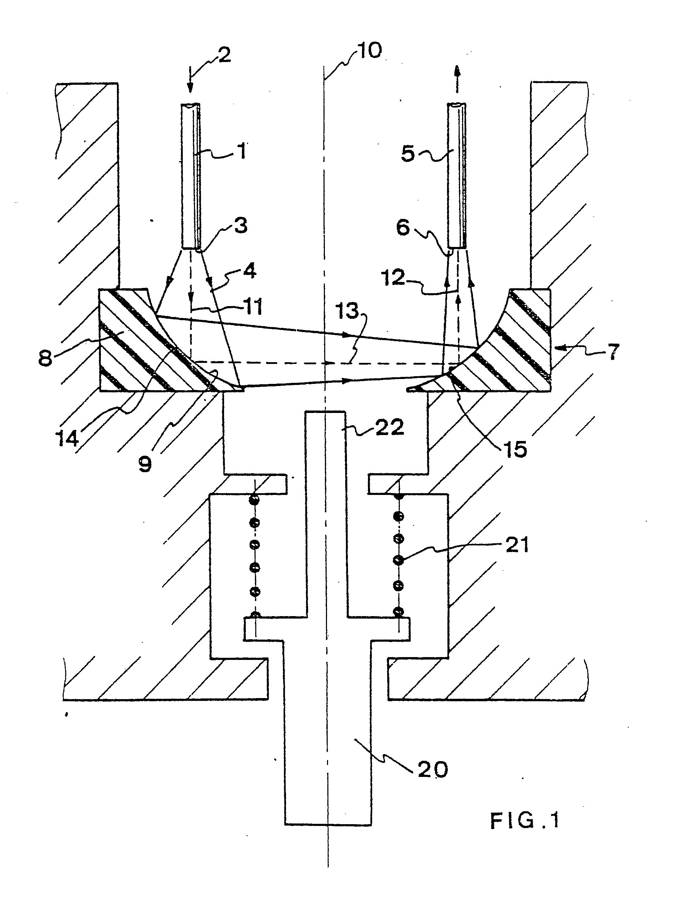

En revenant plus particulièrement à la figure 1, celle-ci représente, sous forme schématique transversale, un mode de réalisation d'un commutateur optique comprenant des premiers moyens source, comme par exemple une fibre optique 1 véhiculant un faisceau lumineux 2 qui émerge de l'extrémité 3 de la fibre 1 pour donner naissance à un faisceau lumineux divergent 4.

Une seconde fibre optique 5 constituant des moyens de réception comporte une face d'entrée 6 qui est couplée avec la face de sortie 3 de la fibre optique 1 par des moyens de couplage du type réfléchissants 7.

Ces moyens de couplage 7 sont constitués par une pièce formant une couronne 8 dont la face intérieure 9 présente une symétrie de révolution autour d'un axe 10.

La surface 9 peut être constituée par une surface conique ou par une surface ayant une courbure concave comme représenté sur la figure toujours de révolution autour de l'axe 10, par exemple une zone sphérique.

Les deux fibres optiques 1 et 5 respectivement émettrice et réceptrice, sont disposées de façon que l'axe optique 11 définissant le chemin optique de sortie du faisceau 4 soit couplé avec l'axe optique 12 définissant le chemin de captation de la fibre 5 par un troisième chemin optique 13 donné par les réflexions sur les deux portions de surface 14 et 15 de la surface 9.

De façon évidente, la surface 9 sera réalisée, par exemple, sur une pièce en matière plastique ou éventuellement en verre, métallisée pour avoir un bon coefficient de réflexion, ou même en métal poli.

De façon avantageuse, les axes optiques 11 et 12, ainsi que l'axe 10 de révolution sont parallèles.

De ce fait, la position de la pièce 8 n'a pas besoin d'être positionnée de façon précise et même une légère différence de parallélisme entre l'axe 10 et les axes optiques 11 et 12 donnerait néanmoins de bons résultats comme il sera explicité ci-après.

Cependant, ces axes 10, 11, 12 devront tendre à être et rester de préférence parallèles.

De plus, ce commutateur comprend des moyens d'occultation commandables, tels que par exemple un bouton pression 20 soumis à l'action d'un ressort 21, et ayant une partie 22 qui puisse venir, lorsque l'on appuie sur la tête 20 du bouton, dans le trajet du faisceau lumineux se propageant suivant l'axe optique 13.

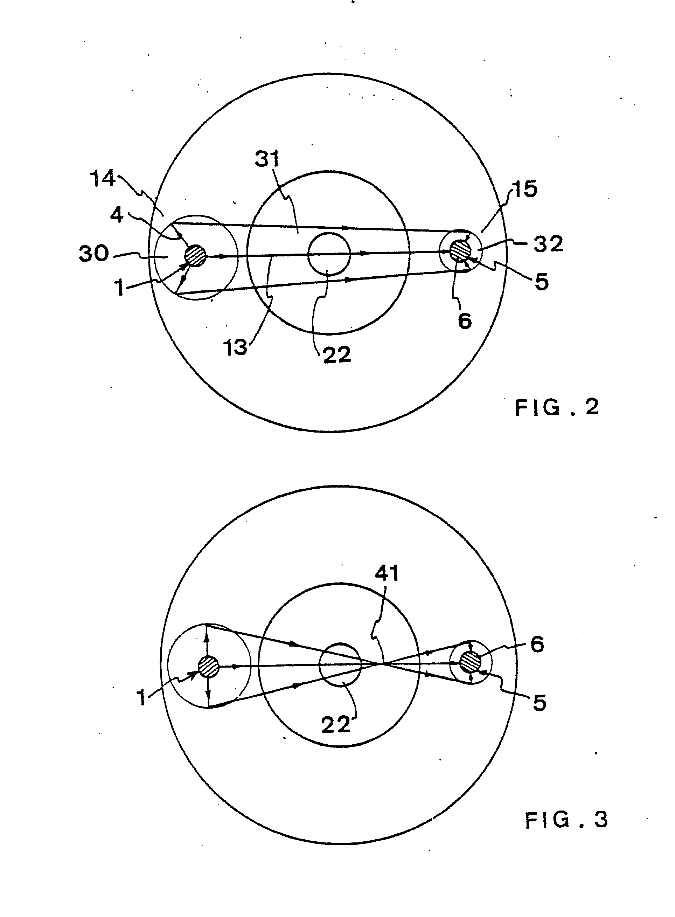

Le fonctionnement du dispositif illustré sur la figure 1 est notamment donné en regard des figures 2 et 3.

Ainsi, le faisceau lumineux 2, qui est introduit dans la fibre 1, lorsqu'il émerge de celle-ci, a une tendance naturelle à diverger notablement comme cela est représenté sur la figure 1.

Cependant, ce faisceau 4 rencontrant la surface concave 9 qui est couplée avec la surface concave 15 est focalisé par deux focalisations successives sensiblement sur la face d'entrée 6 respectivement par les deux surfaces concaves 14 et 15.

L'homme de l'art pourra facilement définir avec une assez bonne approximation la position des faces 3 et 6 des deux fibres en fonction notamment de la valeur de la courbure dans deux plans perpendiculaires des deux portions 14 et 15, de la valeur de la divergence du faisceau 4, de façon que la face 3, constituant une source objet, donne naissance, par les deux focalisations successives sur les faces 14 et 15, à une image sensiblement focalisée sur la face 6 d'entrée de la fibre 5.

Sur la figure 2, il apparaît, notamment en vue de dessus du dispositif selon la figure 1, la tâche lumineuse 30 que forme le faisceau lumineux 4 sur la surface réfléchissante 14, et où l'on voit que ce premier faisceau 4 sensiblement conique subit une première focalisation pour donner naissance à un faisceau 31 suivant l'axe optique 13 pour venir donner une deuxième tâche lumineuse 32 sur la surface réfléchissante 15 qui subit alors une deuxième réflexion convergente pour venir se focaliser sur la face d'entrée 6 de la fibre 5.

En vue de dessus, il apparaît l'extrémité 22 constituant la partie occultante du bouton pression 20 et l'on voit que dans ce mode de réalisation, la section de cette extrémité 22 est notablement plus faible que la section du faisceau 31 et, par conséquent, dans ce cas, il sera nécessaire que l'extrémité 22 occulte considérablement ce faisceau 31 pour que les variations du faisceau obtenues en sortie de la fibre 5 soient significatives car un léger déplacement de cette extrémité 22, notamment transversal, ne donnerait pas de résultat significatif.

Pour cela, afin d'améliorer la sensibilité du dispositif, il est possible de calculer un rayon de courbure de la surface réfléchissante 14, et, en conséquence, celle de la surface 15, pour que cette première surface réfléchissante 14 donne, de l'extrémité 3 de la fibre émettrice 1, une image objet 41 sensiblement sur le trajet ou chemin optique défini sur l'axe 13, comme cela apparaît en vue de dessus sur la figure 3, la surface réfléchissante 15 donnant alors de cette objet image intermédiaire 41 une image focalisée sur l'extrémité 6 de la fibre optique 5.

On s'aperçoit donc dans ce cas que l'épaisseur du faisceau lumineux sur l'axe optique 13 est beaucoup plus faible et, en conséquence, un léger déplacement de l'extrémité 22 du bouton pression 20 entraîne des variations de quantité de lumière beaucoup plus importantes à la sortie notamment de la fibre réceptrice 5.

Bien entendu, dans le commutateur tel qu'illustré sur la figure 1, le faisceau lumineux 2 peut être donné par toute source lumineuse, et notamment par exemple par une diode laser du type AsGa, et le faisceau reçu par la fibre 5 peut, bien entendu, être traité de façon visuelle mais avantageusement il peut être couplé avec une cellule photosensible connectée à tout appareil électronique de traitement.

Le commutateur tel qu'illustré sur les figures 1 à 3 peut trouver de nombreuses applications, notamment dans tous les systèmes de transmission par câble de fibres optiques, mais aussi dans les robots comportant des bras de préhension afin par exemple de détecter la présence d'un objet.

En effet, dans ce cas, si en déplaçant le commutateur optique qui sera éventuellement placé sur un bras palpeur, il vient par l'intermédiaire de la tête 20 du bouton pression au contact d'un objet, l'extrémité 22 interfère avec le faisceau lumineux sur le troisième chemin optique 13, ce qui entraîne de ce fait une variation correspondante du signal lumineux à la sortie de la fibre 5. Cette variation est donc l'interprétation de la présence d'un objet qui a été touché.

Bien entendu, les moyens qui ont été donnés ne représentent qu'un mode de réalisation et ceux-ci peuvent être éventuellement modifiés tout en restant dans le cadre de l'invention, sans pour cela en changer sa portée.

Notamment, il a été mentionné le terme « focalisation ». Aussi, il faut le prendre dans le sens d'une possibilité de réflexion convergente qui permet de concentrer un maximum de faisceaux vers un point et, bien entendu, on peut admettre malgré tout des pertes si l'image focalisée n'est pas exactement d'une dimension voulue par rapport par exemple à l'entrée de la fibre optique.

De même, par moyen d'occultation commandable, il faut entendre tous moyens qui permettent, par une commande, soit manuelle, automatique ou par tout autre procédé, de passer dans le faisceau lumineux suivant l'axe optique 13 pour pouvoir occulter tout ou partie du faisceau lumineux.

A titre d'exemple, en plus du bouton-pression illustré, on peut citer par exemple un codeur angulaire constitué par exemple par une roue comportant alternativement des zones opaques et transparentes, un fil, etc.

De même, il a été mentionné que la surface de révolution pouvait avoir un axe parallèle à l'axe des fibres optiques, mais il est possible d'obtenir une surface de révolution dont l'axe soit perpendiculaire à la direction de ces deux fibres optiques ; bien entendu, pour certains cas d'application, cet axe peut avoir des directions comprises entre ces deux zones mentionnées ci-dessus.

**Revendications**

1. Commutateur optique comprenant :
des moyens source (1, 2, 3) pour émettre un faisceau lumineux (4) suivant un premier chemin optique (11),
des moyens récepteurs (5, 6) pour recevoir ledit faisceau lumineux (4) suivant un deuxième chemin optique (12),
des moyens de couplage (7) par réflexion des deux dits premier et second chemins optiques, comportant au moins deux portions de surface (14, 15) réfléchissante agencées à distance l'une de l'autre de façon à transmettre ledit faisceau dudit premier audit second chemin optique en passant par un troisième chemin optique (13) s'étendant entre les deux dites portions de surface réfléchissante, et,
des moyens, commandables, d'occultation (20, 22...) au moins partielle dudit faisceau sur ledit troisième chemin optique (13),
caractérisé par le fait que les deux dites portions (14, 15) de surface réfléchissante appartiennent à une même surface unitaire ayant une symétrie de révolution autour d'un axe (10).

2. Commutateur optique selon la revendication 1, caractérisé par le fait que les premier (11) et second (12) chemins optiques, ainsi que ledit axe (10) de ladite surface unitaire de révolution, sont sensiblement parallèles.

3. Commutateur selon l'une des revendications 1 ou 2, caractérisé par le fait que ladite surface unitaire de révolution est une surface conique.

4. Commutateur selon l'une des revendications 1 ou 2, caractérisé par le fait que ladite surface unitaire de révolution est une surface engendrée par une courbe concave.

5. Commutateur selon la revendication 1, caractérisé par le fait que lesdits moyens de couplage par réflexion sont agencés de façon à former une image objet desdits moyens source (3) sensiblement sur lesdits moyens (6) récepteur.

6. Commutateur selon la revendication 1, caractérisé par le fait que lesdits moyens de couplage par réflexion sont agencés de façon à former au moins un objet image source (4) sensiblement sur ledit troisième chemin optique (13).

**Claims**

1. An optical switch comprising :
source means (1, 2, 3) for emitting a beam of light (4) along a first optical path (11) ;
receiver means (5, 6) for receiving said beam of light (4) along a second optical path (12) ;
means (7) for coupling together said first and second optical paths by reflection, said means comprising at least two reflecting surface portions (14, 15) disposed at a distance from one another in such a manner as to transmit said beam from said first to said second optical path via a third optical path (13) extending between said two portions of reflecting surface ; and
controllable means (20, 22, ...) for occulting at least a portion of said beam on said third optical path (13) ;
characterized by the fact that said two portions of reflecting surface (14, 15) belong to a single surface of revolution which is circularly symmetrical about an axis (10).

2. An optical switch according to claim 1, characterized by the fact that the first (11) and second (12) optical paths, together with said axis (10) of said single surface of revolution are substantially parallel.

3. A switch according to claim 1 or 2, characterized by the fact that said single surface of revolution is a conical surface.

4. A switch according to claim 1 or 2, characterized by the fact that said single surface of revolution is a surface generated by a concave curve.

5. A switch according to claim 1, characterized by the fact that said means for coupling by reflection are disposed in such a manner as to form an object image of said source means (3) substantially on said receiver means (6).

6. A switch according to claim 1, characterized by the fact that said means for coupling by reflection are arranged in such a manner as to form at least one source image object substantially on said third optical path (13).

**Patentansprüche**

1. Optischer Schalter, umfassend :

Quellenmittel (1, 2, 3) zum Emittieren eines Lichtstrahls (4) längs einer ersten optischen Bahn (11),

Empfangsmittel (5, 6) zum Empfang des genannten Lichtstrahls (4) längs einer zweiten optischen Bahn (12),

Reflexionskopplungsmittel (7) der genannten ersten und der genannten zweiten optischen Bahn, umfassend mindestens zwei reflektierende Oberflächenabschnitte (14, 15), die in einem Abstand voneinander derart angeordnet sind, daß der genannte Lichtstrahl der genannten ersten optischen Bahn unter Durchlaufen einer dritten optischen Bahn (13) sich zwischen den genannten beiden reflektierenden Oberflächenabschnitten erstreckt, und

steuerbare Mittel (20, 22, ...), zum mindestens teilweisen Unterbrechen des genannten Lichtstrahls auf der genannten dritten optischen Bahn (13),

dadurch gekennzeichnet, daß die beiden genannten Abschnitte (14, 15) der reflektierenden Oberfläche ein und derselben einheitlichen Oberfläche mit einer Umlaufsymmetrie bezüglich einer Achse (10) angehören.

2. Optischer Schalter nach Anspruch 1, dadurch gekennzeichnet, daß die erste (11) und zweite (12) optische Bahn, wie auch die genannte Achse (10) der genannten einheitlichen Umlaufoberfläche, im wesentlichen parallel sind.

3. Optischer Schalter nach Anspruch 1 oder 2, dadurch gekennzeichnet, daß die genannte einheitliche Umlaufoberfläche eine konische Oberfläche ist.

4. Optischer Schalter nach Anspruch 1 oder 2, dadurch gekennzeichnet, daß die genannte einheitliche Umlaufoberfläche eine durch eine konkave Kurve erzeugte Oberfläche ist.

5. Optischer Schalter nach Anspruch 1, dadurch gekennzeichnet, daß die genannten Reflexionskopplungsmittel derart ausgebildet sind, daß sie ein Objektbild der genannten Quellenmittel (3) im wesentlichen auf die genannten Empfangsmittel (6) abbilden.

6. Optischer Schalter nach Anspruch 1, dadurch gekennzeichnet, daß die genannten Reflexionskopplungsmittel derart ausgebildet sind, daß sie mindestens ein Quellenobjektbild (4) im wesentlichen auf der genannten dritten optischen Bahn (13) abbilden.

FIG.1

FIG . 2

FIG . 3